Europäisches Patentamt

European Patent Office

Office européen des brevets

(19)

(11) Numéro de publication : **0 212 029**
**B1**

(12) **FASCICULE DE BREVET EUROPÉEN**

(45) Date de publication du fascicule du brevet :
03.01.90

(21) Numéro de dépôt : 85401980.9

(22) Date de dépôt : 11.10.85

(51) Int. Cl.⁵ : **B 01 D 53/26**, B 65 D 81/26

(54) **Dispositif d'absorption d'humidité atmosphérique.**

(30) Priorité : 12.08.85 FR 8512295

(43) Date de publication de la demande :
04.03.87 Bulletin 87/10

(45) Mention de la délivrance du brevet :
03.01.90 Bulletin 90/01

(84) Etats contractants désignés :
AT BE CH DE FR GB IT LI LU NL SE

(56) Documents cités :
WO—A—81 /019 95
NL—A— 8 200 065
US—A— 2 341 893

(73) Titulaire : ALIZOL SA Société Anonyme dite:
Route du Manoir
F-27460 Alizay (FR)

(72) Inventeur : Fougeres, Michel
23 route de Breteau Ouzouer sur Trezee
F-45250 Briare (FR)
Inventeur : Boutin, Jean-Luc
33 rue du Fourneau Ouzouer sur Trezee
F-45250 Briare (FR)

(74) Mandataire : Clanet, Denis et al
Cabinet Beau de Loménie 55, rue d'Amsterdam
F-75008 Paris (FR)

## Description

La présente invention concerne un dispositif d'absorption d'humidité atmosphérique. Ce dispositif est couramment utilisé pour maintenir l'air, ou en règle générale le gaz ou mélange de gaz présent à l'intérieur d'un volume sensiblement fermé, comme par exemple l'intérieur de conteneurs destinés au transport de matériels sensibles à l'humidité, certains locaux d'habitation, etc...

Pour ce faire, on utilise des sels hygroscopiques, tel que le chlorure de Calcium CaCl2, qui fixent la vapeur d'eau présente dans l'atmosphère.

Dans la majorité des dispositifs connus, les sels sont reçus dans une nacelle suspendue au-dessus d'un bac de réception. En effet, lorsque la quantité d'eau captée devient importante, il apparaît des gouttes de solution saturée dite saumure qui s'écoulent le long du bloc, ou du tas, de sel et sont collectées dans le bac de réception. Lorsque la charge initiale de sel a totalement disparu, le bac contient un certain volume de saumure qu'il convient de jeter avant de placer une nouvelle charge dans la nacelle.

En premier lieu, la manutention du bac de réception plus ou moins rempli de solution jusqu'à un lavabo, un évier, etc..., risque de provoquer des éclaboussures de solution, ce qui n'est guère souhaitable.

En second lieu, ce type de dispositif est inadéquat pour des volumes mobiles (conteneurs de transport, habitations mobiles de loisir, automobiles, autocars, etc...) car les secousses du transport provoqueraient immédiatement des éclaboussures de solution.

Enfin, la partie fixe du dispositif (nacelle plus bac de réception) représente un coût important, ce qui exclut les applications à usage unique.

La présente invention permet de pallier ces inconvénients, en proposant un dispositif d'absorption d'humidité atmosphérique, comprenant une nacelle destinée à recevoir une charge de produit hygroscopique et un bac de réception de saumure, caractérisé en ce qu'il comprend une enveloppe souple ou semi rigide définissant deux chambres, une chambre supérieure dans laquelle est placée ladite nacelle, et une chambre inférieure formant ledit bac de réception, lesdites chambres communiquant entre elles via des passages de section restreinte et ladite enveloppe comportant au niveau de la chambre supérieure des ouvertures de communication entre l'extérieur et ladite chambre supérieure, et en ce qu'il comporte un clapet anti-retour entre lesdites chambres et empêchant l'écoulement depuis la chambre inférieure vers la chambre supérieure.

L'invention sera maintenant décrite en se référant aux dessins annexés, dans lesquels :

la figure 1 est une vue de côté d'un dispositif selon l'invention,

les figures 2 et 3 sont des coupes verticales et horizontales du dispositif, prises suivant les lignes II-II et III-III à la figure 1 respectivement.

la figure 4 est une vue de côté similaire à celle de la figure 1, illustrant le dispositif avant mise en service, ainsi que diverses variantes de détail, et

la figure 5 est une coupe partielle agrandie analogue à celle de la figure 2 et illustrant une caractéristique importante de l'invention.

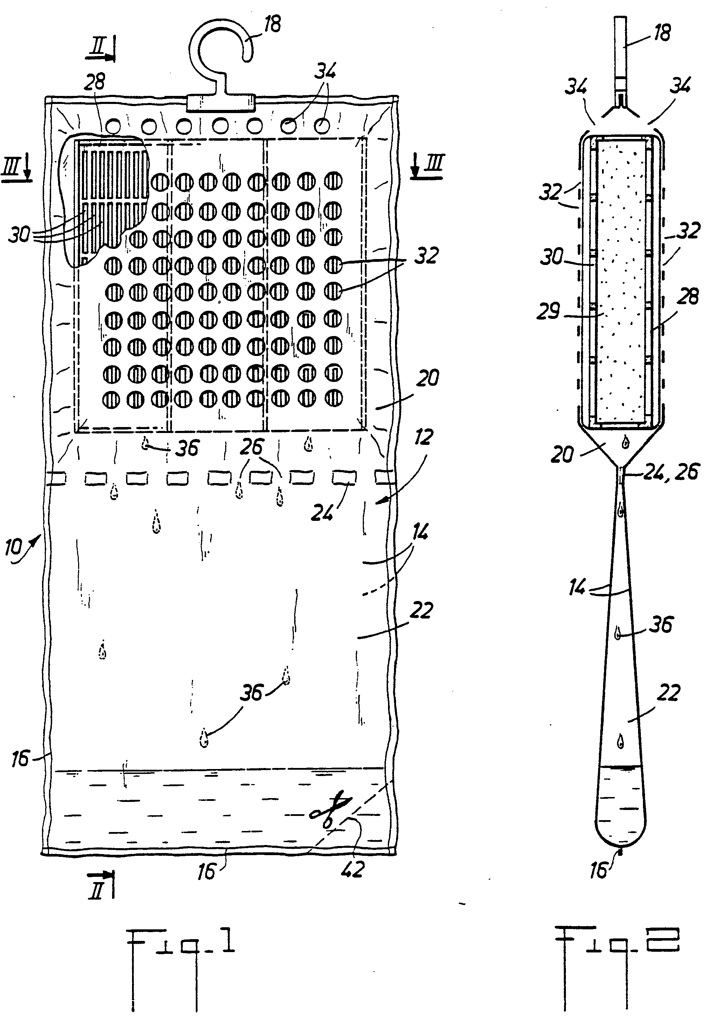

Le dispositif désigné par la référence générale 10 est illustré en condition normale de fonctionnement à la figure 1.

Il comprend une enveloppe 12 formée de deux feuilles 14 de matière plastique rectangulaires superposées et soudées à leur périphérie par des soudures étanches 16.

A la partie supérieure est prévu un crochet 18, ou tout moyen permettant de suspendre le dispositif en fonctionnement.

Le volume intérieur de l'enveloppe 12 est recoupé en deux chambres : une chambre supérieure 20 et une chambre inférieure 22, par une soudure discontinue 24 définissant des passages de section restreinte 26 entre les deux chambres.

La chambre supérieure 20 abrite une nacelle 28 qui contient une charge 29 de sels hygroscopiques, par exemple sous forme de granulés de chlorure de calcium. La nacelle consiste en un boîtier rigide ou semi-rigide de forme générale indifférente et percé de multiples perforations latérales 30 permettant à l'air de venir au contact des granulés tout en empêchant ceux-ci de s'échapper vers l'extérieur.

Au niveau de la chambre supérieure, l'enveloppe comporte des ouvertures 32 de communication entre l'extérieur et la chambre supérieure 20.

De la sorte, l'air ambiant traverse les ouvertures 32 puis les perforations 30 et vient au contact des granulés qui absorbent la vapeur d'eau et l'air asséché ressort vers l'extérieur.

Dans certains cas la réaction légèrement exothermique d'absorption provoque un mouvement de convection et l'air asséché s'échappe par les ouvertures les plus hautes, de préférence des ouvertures 34 ménagées tout à fait au sommet de l'enveloppe.

Progressivement, il se forme au sein de la charge de sels hygroscopiques des gouttelettes 36 de solution saturée, ou saumure, qui s'écoulent de la nacelle puis empruntent les passages 26 pour se rassembler au fond de la chambre inférieure, qui constitue ainsi un bac de réception pour cette saumure.

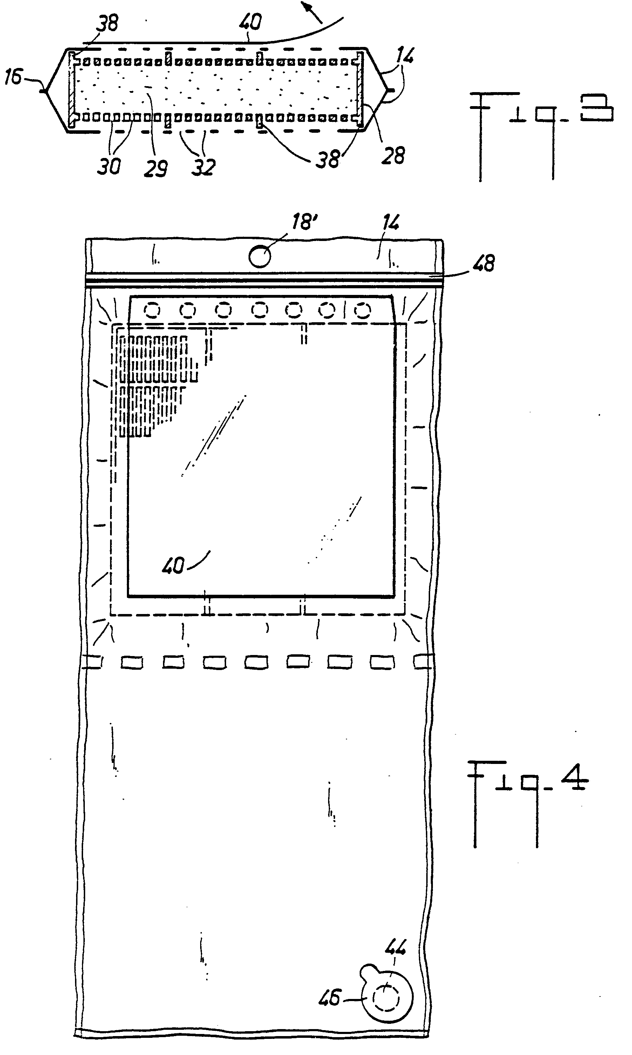

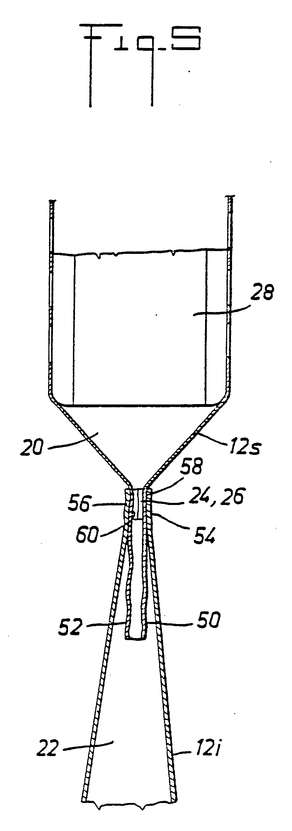

Comme on le remarque sur les figures 2 et 3, les deux côtés de l'enveloppe 12 comportent des ouvertures 32 et 34 afin d'obtenir un bon échange permanent avec l'air ambiant.

Pour éviter que les gouttes de saumure 36 ne s'écoulent vers l'extérieur en empruntant par capillarité, les passages 32, la nacelle 28 comporte un certain nombre de nervures d'écartement 38 afin de maintenir une distance suffisante entre les perforations 30 de la nacelle et les ouvertures 32 de l'enveloppe. Avantageusement, la nacelle pourra être réalisée en matière plastique moulée permettant de faibles coûts de revient.

Avant la mise en service du dispositif, les ouvertures 32 et 34 sont obturées provisoirement au moyen d'une étiquette autocollante 40 (figures 3 et 4) qui pourra également constituer un support publicitaire, informatif et/ou décoratif.

Lorsque la charge de sels hygroscopiques est épuisée, on peut simplement jeter le dispositif en le saisissant par le crochet 18, sans risques d'éclaboussures puisque la remontée de saumure de la chambre inférieure vers la chambre supérieure est pratiquement empêchée par l'étroitesse des passages de section restreinte 26, et la présence d'un clapet anti-retour qui sera décrit plus loin.

Si l'on désire vider la saumure, dans un évier ou tout autre point d'évacuation équivalent, avant de jeter le dispositif usagé, on peut découper un coin de l'enveloppe suivant une ligne de découpe 42 préimprimée comme indiqué à la figure 1. Selon la variante illustrée à la figure 4, on a prévu un trou de vidange 44 à l'extrémité inférieure de l'enveloppe et un opercule 46 d'étanchéité amovible.

A cette même figure 4, on remarque que le crochet 18 a été remplacé par un simple évidement 18' des feuilles 14, ménagé dans une marge libre au-dessus de la chambre supérieure.

Dans cette variante également, la soudure supérieure 16 est remplacée par un dispositif d'ouverture/fermeture par exemple du type à glissière 48 autorisant un accès à la chambre supérieure depuis l'extérieur et donc la réutilisation du dispositif. En effet, par ouverture de la glissière 48, on peut extraire la nacelle usagée, donc vidée de sa charge de sel et introduire une nouvelle nacelle contenant une charge neuve. Bien entendu, la saumure résultant de la précédente utilisation est évacuée par le trou de vidange 44 et l'opercule 46 est remis en place.

Si l'on désire temporairement mettre le dispositif hors service, il suffit de reboucher les ouvertures 32-34 en remettant en place l'étiquette 40.

Le dispositif selon l'invention peut être utilisé dans toutes les applications conventionnelles de ce genre de dispositifs.

Il trouve une application avantageuse pour l'assèchement de l'air dans tous les volumes mobiles : conteneurs de transport, bateaux, caravanes, automobiles, autocars etc...

En effet, malgré les secousses et les mouvements désordonnés auxquels est soumis le dispositif, on ne risque à aucun moment de répandre des éclaboussures de saumure en raison de l'étroitesse des passages de section restreinte entre les deux chambres et la présence d'un clapet anti-retour entre elles. De plus, le dispositif peut être enlevé et jeté sans risque, même par une personne n'ayant aucune conscience des désagréments que pourraient causer les éclaboussures de saumure, notamment vis-à-vis de la corrosion.

Dans la variante de base du type jetable, le dispositif est particulièrement économique. Il est également pratique d'emploi puisque la charge n'a pas à être manipulée séparément dans la mesure où l'enveloppe qui la contient forme en même temps son emballage.

Pour l'enveloppe elle-même, on pourra choisir des feuilles de PVC, de polyéthylène, de complexe plastique-aluminium, les feuilles pouvant être souples ou semi rigides.

Bien entendu, on dimensionne la chambre inférieure de l'enveloppe de manière à pouvoir contenir une quantité de saumure correspondant à la charge contenue dan le boîtier.

Selon une caractéristique importante de l'invention, on empêche pratiquement totalement toute remontée de liquide depuis le compartiment inférieur vers le compartiment supérieur grâce à un arrangement très simple, formant clapet antiretour.

Comme illustré à la figure 5, l'enveloppe 12 est formée de deux parties, une partie supérieure 12s englobant la chambre supérieure 20 et une partie inférieure 12i englobant la chambre inférieure 22. Les bordures inférieures 50, 52 de l'enveloppe supérieure pénètrent sur une certaine distance à l'intérieur de la partie inférieure de l'enveloppe entre les bordures supérieures 54, 56 de cette dernière. Des soudures continues 58 et 60 sont ménagées entre les bordures 50 et 54 d'une part et 52 et 56 d'autre part afin d'isoler l'ensemble de l'enveloppe vis-à-vis de l'extérieur, et la soudure discontinue 24 est ménagée entre les deux bordures inférieures de l'enveloppe supérieure pour définir les passages de section restreinte entre les deux chambres.

Grâce à cette disposition, les deux bordures inférieures 50, 52 constituent un clapet antiretour permettant l'écoulement de saumure depuis la chambre supérieure 20 vers la chambre inférieure 22, mais empêchant pratiquement tout retour de saumure vers la chambre supérieure.

En effet, si à la suite d'une manipulation erronée la partie inférieure de l'enveloppe était comprimée ou renversée au point de risquer un tel retour de saumure, les deux bordures inférieures de l'enveloppe supérieure viendraient s'appliquer étroitement l'une contre l'autre en empêchant le passage de saumure entre elles.

Selon des variantes, non représentées, de cette caractéristique, on peut prévoir que l'enveloppe soit unique et que des bandes soient rapportées à l'intérieur de l'enveloppe et à la jonction des deux compartiments, ces bandes pénétrant sur une certaine distance à l'intérieur de la chambre inférieure. Il est même possible de ne prévoir qu'une seule bande, soudée de manière continue à l'une des parois de l'enveloppe et de manière discontinue à l'autre. La fonction clapet antiretour étant alors assumée entre l'unique bande et la paroi de l'enveloppe à laquelle elle est liée par la soudure discontinue.

En régle générale toute forme de clapet antiretour pourra convenir dans le cadre de l'invention.

## Revendications

1. Dispositif d'absorption d'humidité atmosphérique, comprenant une nacelle (28) destinée à recevoir une charge (29) de produit hygroscopique et un bac (22) de réception de saumure, caractérisé en ce qu'il comprend une enveloppe (12) souple ou semi-rigide définissant deux chambres (20, 22), une chambre supérieure (20) dans laquelle est placée ladite nacelle (28), et une chambre inférieure (22) formant ledit bac de réception, lesdites chambres communiquant entre elles via des passages (26) de section restreinte et ladite enveloppe (12) comportant au niveau de la chambre supérieure des ouvertures (32) de communication entre l'extérieur et ladite chambre supérieure, et en ce qu'il comporte un clapet anti-retour entre lesdites chambres et empêchant l'écoulement depuis la chambre inférieure vers la chambre supérieure.

2. Dispositif selon la revendication 1, caractérisé en ce que ladite enveloppe (12) est réalisée à partir de feuilles (14) en matière plastique, en complexe plastique-aluminium ou toute autre matière souple ou semi-rigide.

3. Dispositif selon la revendication 2, caractérisé en ce que lesdites chambres sont séparées par une soudure discontinue (24) desdites feuilles.

4. Dispositif selon la revendication 3, caractérisé en ce que ledit clapet anti-retour est également constitué par au moins une feuille en matière plastique, en complexe plastique-aluminium ou toute autre matière souple ou semi-rigide, s'étendant depuis ladite soudure discontinue vers l'intérieur de ladite chambre inférieure.

5. Dispositif selon la revendication 4, caractérisé en ce que l'enveloppe est formée de deux parties, supérieure et inférieure (12s, 12i) présentant des bordures inférieures (50, 52) et supérieures (54, 56) respectivement, les bordures inférieures (50, 52) de la partie supérieure (12s) pénétrant sur une certaine distance entre les bordures supérieures (54, 56) de la partie inférieure (12i), des soudures continues (58, 60) étant ménagées entre les bordures inférieures et supérieures, et ladite soudure discontinue (24) étant ménagée entre lesdites bordures inférieures.

6. Dispositif selon l'une quelconque des revendications 1 à 5, caractérisé en ce que ladite nacelle (28) consiste en un boîtier rigide ou semi-rigide pourvu de perforations (30) latérales.

7. Dispositif selon la revendication 6, caractérisé en ce que ledit boîtier comporte des nervures (38) d'écartement.

8. Dispositif selon l'une quelconque des revendications 1 à 7, caractérisé en ce qu'il comporte des étiquettes (40) d'obturation provisoire desdites ouvertures (32).

9. Dispositif selon l'une quelconque des revendications 1 à 8, caractérisé en ce que ladite chambre inférieure (22) comporte un trou de vidange (44) et un opercule amovible (46).

10. Dispositif selon l'une quelconque des revendications 1 à 9, caractérisé en ce que ladite enveloppe comporte des moyens d'accrochage (18, 18') à son extrémité supérieure.

11. Dispositif selon l'une quelconque des revendications 1 à 1 0, caractérisé en ce que ladite enveloppe (12) comporte un dispositif d'ouverture/fermeture (48) autorisant un accès à la chambre supérieure (20) depuis l'extérieur.

## Claims

1. Device for the absorption of atmospheric moisture, comprising a body (28) for receiving a filling (29) of hygroscopic product and a container (22) for the brine, characterized in that it comprises a supple or semi-rigid envelope defining two chambers (20, 22), one upper chamber (20) in which said body (28) is placed, and a lower chamber (22) forming said receiving container, said chambers communicating one with the other via passages (26) of restricted section and said envelope (12) comprising, at the level of the upper chamber, openings (32) which create a communication between the outside and the upper chamber, and in that it comprises a check valve provided between said chambers and preventing the flow from the lower chamber towards the upper chamber.

2. Device according to claim 1, characterized in that said envelope (12) is made from sheets (14) in either plastic material, or plastics-aluminium complex or any other flexible or semi-flexible material.

3. Device according to claim 2, characterized in that said chambers are separated by a discontinued solder (24) of said sheets.

4. Device according to claim 3, characterized in that said check-valve is also constituted by at least one sheet of plastic material, or plastics-aluminium complex or any other flexible or semi-rigid material, which extends from said discontinuous solder towards said lower chamber.

5. Device according to claim 4, characterized in that the envelope is formed in two upper and lower parts (12s, 12i) having lower (50, 52) and upper (54, 56) borders, respectively, the lower borders (50, 52) of the upper part (12s) penetrating through a certain distance between the upper borders (54, 56) of the lower part (12i), continuous soldering (58, 60) being provided between the lower and upper edges, and said soldering (24) being arranged between said lower edges.

6. Device according to any one of claims 1 to 5, characterized in that said body (28) consists in a rigid or semi-rigid casing provided with side perforations (30).

7. Device according to claim 6, characterized in that said casing is provided with spacing ribs (38).

8. Device according to any one of claims 1 to 7, characterized in that it comprises labels (40) for temporarily closing said openings (32).

9. Device according to any one of claims 1 to 8, characterized in that said lower chamber (22) comprises a draining hole (44) and a removable cover (46).

10. Device according to any one of claims 1 to 9, characterized in that said envelope comprises fastening means (18, 18') provided at its upper end.

11. Device according to any one of claims 1 to 10, characterized in that said envelope comprises an opening/closing device (48) giving access to the upper chamber (20) from the outside.

**Patentansprüche**

1. Einrichtung zur Absorption von Luftfeuchtigkeit, umfassend einen Behälter (28), der dazu bestimmt ist, eine Füllung (29) eines hygroskopischen Materials aufzunehmen und einen Laugenbehälter (22), dadurch gekennzeichnet, daß sie eine biegsame oder halbsteife Hülle (12) umfaßt, die zwei Kammern (20, 22) definiert, eine obere Kammer (20), in der der Behälter (28) angeordnet ist und eine untere Kammer (22), die den Aufnahmebehälter bildet, wobei die Kammern untereinander mittels Passagen (26) mit verengtem Querschnitt in Verbindung stehen und wobei die Hülle (12) im Bereich der oberen Kammer Verbindungsöffnungen (32) zwischen dem Äußeren und der oberen Kammer aufweist und dadurch, daß eine Rückschlagklappe zwischen den Kammern vorgesehen ist, die das Übertreten von der unteren zur oberen Kammer verhindert.

2. Einrichtung nach Anspruch 1, dadurch gekennzeichnet, daß die Hülle (12), von Kunststoffblättern (14) ausgehend, als Kunststoff-Aluminiumkomplex oder mit jedem anderen biegsamen oder halbsteifem Material hergestellt ist.

3. Einrichtung nach Anspruch 2, dadurch gekennzeichnet, daß die Kammern durch eine nicht durchgehende Verschweißung (24) der Blätter betrennt sind.

4. Einrichtung nach Anspruch 3, dadurch gekennzeichnet, daß die Rückschlagklappe ebenfalls aus zumindest einem Blatt aus Kunststoffmaterial in Verbindung mit Kunststoff-Aluminium oder einem anderen weichen oder halbsteifen Material besteht und sich über die unterbrochene Schweißnaht ins Innere der unteren Kammer erstreckt.

5. Einrichtung nach Anspruch 4, dadurch gekennzeichnet, daß die Hülle aus zwei Teilen, einem oberen und einem unteren (12s, 12i) gebildet ist, die untere Ränder (50, 52) bzw. obere Ränder (54, 56) aufweist, wobei die unteren Ränder (50, 52) des Oberteils (12s) sich über eine bestimmte Länge zwischen den oberen Rändern (54, 56) des unteren Teils (12i) erstrecken und wobei durchgehende Schweißungen (58, 60) zwischen den unteren und oberen Rändern vorgesehen sind und daß die unterbrochende Schweißung (24) zwischen den unteren Rändern ausgeführt wird.

6. Einrichtung nach einem der Ansprüche 1 bis 5, dadurch gekennzeichnet, daß der Behälter (28) aus einem steifen oder halbsteifen Gehäuse besteht, das mit Längsöffnungen (30) versehen ist.

7. Einrichtung nach Anspruch 6, dadurch gekennzeichnet, daß das Gehäuse abstehende Rippen (38) trägt.

8. Einrichtung nach einem der Ansprüche 1 bis 7, dadurch gekennzeichnet, daß entfernbare Abdeckungen (40), die Öffnungen (32) bedecken.

9. Einrichtung nach einem der Ansprüche 1 bis 8, dadurch gekennzeichnet, daß die untere Kammer (22) eine Ausgußöffnung (44) und einen wiederanbringbaren Verschluß (46) aufweist.

10. Einrichtung nach einem der Ansprüche 1 bis 9, dadurch gekennzeichnet, daß die Hülle Befestigungsvorrichtungen (18, 18') an ihrem oberen Rand aufweist.

11. Einrichtung nach einem der Ansprüche 1 bis 10, dadurch gekennzeichnet, daß die Hülle (12) eine Öffnungs/Schließvorrichtung (48) aufweist, die den Zugang zur oberen Kammer (20) von außen ermöglicht.

Fig.1

Fig.2

Fig. 3

Fig. 4

Fig. 5